# EUROPÄISCHE PATENTANMELDUNG

(11) **EP 4 542 016 A1**
(43) Veröffentlichungstag der Anmeldung: **23.04.2025**
(21) Anmeldenummer: 24190912.6
(22) Anmeldetag: 25.07.2024
(51) Int. Cl.: F02B 77/08, G01L 23/18, G01L 23/22

(54) **VORKAMMERZÜNDKERZE, VORRICHTUNG UND VERFAHREN ZUM BESTIMMEN MINDESTENS EINER MOTORBETRIEBSGRÖSSE**

(30) Priorität: 20.10.2023 DE 102023210374
(71) Anmelder: DKT Verwaltungs-GmbH, 69190 Walldorf (DE)
(72) Erfinder: Wippermann, Nicolas, 76228 Karlsruhe (DE); Kuhnert, Steffen, 69126 Heidelberg (DE)
(74) Vertreter: Ullrich & Naumann PartG mbB

(57) **Zusammenfassung**

Die Erfindung betrifft eine Vorkammerzündkerze (1) umfassend eine Mittelelektrode (2), einen die Mittelelektrode (2) zumindest teilweise umgebenden Isolator (3), und ein den Isolator (3) zumindest teilweise umgebendes Gehäuse (4) mit einer eine Vorkammer (8) bildenden Vorkammerkappe (9), die dadurch gekennzeichnet ist, dass mindestens ein Dehnungsmessstreifen (18', 18") vorgesehen ist, der geeignet ist, mit einer insbesondere externen Auswerteeinheit zu kommunizieren, wobei der mindestens eine Dehnungsmessstreifen (18', 18") auf und/oder in einer Oberfläche (17', 17") des Gehäuses (4) zur Erfassung von Dehnungsänderungen angeordnet ist, wobei die Dehnungsänderungen mit mindestens einer Motorbetriebsgröße, insbesondere dem Brennraumdruck und/oder dem Vorkammerdruck der Vorkammerzündkerze (1), korrelieren.

## Beschreibung

Die Erfindung betrifft eine Vorkammerzündkerze umfassend eine Mittelelektrode, einen die Mittelelektrode zumindest teilweise umgebenden Isolator, und ein den Isolator zumindest teilweise umgebendes Gehäuse mit einer eine Vorkammer bildenden Vorkammerkappe.

Des Weiteren betrifft die Erfindung eine Vorrichtung zum Bestimmen mindestens einer Motorbetriebsgröße mit einer Vorkammerzündkerze. Zudem hat die vorliegende Erfindung ein Verfahren zum Bestimmen mindestens einer Motorbetriebsgröße zum Gegenstand.

Vorkammerzündkerzen der in Rede stehenden Art sind seit Jahren aus der Praxis bekannt. Beispielsweise dienen Vorkammerzündkerzen zur Verwendung in Verbrennungsmotoren, insbesondere in Verbrennungsmotoren, die nach dem Prinzip der Magerverbrennung arbeiten. Vorkammerzündkerzen weisen eine Vorkammer auf, die durch Übertrittsöffnungen mit dem Brennraum eines Verbrennungsmotors zusammenwirkt. Das Kraftstoff-Luft-Gemisch wird mittels Zündfunken in der Vorkammer gezündet, wonach sich die Verbrennung in Form von Zündfackeln durch die Übertrittsöffnungen in den Brennraum des Verbrennungsmotors fortsetzt und dort das Gemisch entzündet.

Zur Verbesserung der Motorleistung und in diesem Zusammenhang insbesondere des Zündverhaltens können verschiedene Einstellparameter, beispielsweise der Zündwinkel, basierend auf einer Motorbetriebsgröße, beispielsweise einem Brennraumdruck, geregelt werden. Der Brennraumdruck kann während des Verbrennungsvorgangs im Motorzylinder mithilfe geeigneter Sensoren ermittelt werden.

Der vorliegenden Erfindung liegt die Aufgabe zugrunde, eine Vorkammerzündkerze der eingangs genannten Art derart auszugestalten und weiterzubilden, dass mit konstruktiv einfachen Mitteln eine Überwachung des Motorbetriebs, insbesondere des Zündverhaltens, ermöglicht wird. Des Weiteren sollen eine Vorrichtung und ein Verfahren zum Bestimmen mindestens einer Motorbetriebsgröße angegeben werden.

Erfindungsgemäß wird die voranstehende Aufgabe durch die Merkmale des Anspruches 1 gelöst. Danach ist die in Rede stehende Vorkammerzündkerze dadurch gekennzeichnet, dass mindestens ein Dehnungsmessstreifen vorgesehen ist, der geeignet ist, mit einer insbesondere externen Auswerteeinheit zu kommunizieren, wobei der mindestens eine Dehnungsmessstreifen auf und/oder in einer Oberfläche des Gehäuses zur Erfassung von Dehnungsänderungen angeordnet ist, wobei die Dehnungsänderungen mit mindestens einer Motorbetriebsgröße, insbesondere dem Brennraumdruck und/oder dem Vorkammerdruck der Vorkammerzündkerze, korrelieren.

In erfindungsgemäßer Weise ist zunächst erkannt worden, dass sich die Vorkammerzündkerze, insbesondere das Gehäuse, während des Motorbetriebs verformt. Diese Verformungen lassen sich in einen quantitativen Zusammenhang mit bestimmten Motorbetriebsgrößen, insbesondere dem Brennraumdruck und/oder dem Vorkammerdruck der Vorkammerzündkerze, bringen. Somit kann auf Basis einer bekannten Verformung des Gehäuses eine bestimmte Motorbetriebsgröße bzw. ein Wert einer Motorbetriebsgröße abgeleitet werden. Der quantitative Zusammenhang zwischen den Verformungen der Vorkammerzündkerze und einer bestimmten Motorbetriebsgröße kann beispielsweise anhand von Kalibrierungsmessungen in einem Versuchsstand oder anhand von Ergebnissen computergestützter Berechnungen, wie Finite-Elemente-Simulation, bestimmt werden. Außerdem kann ein eventuelles Lösen der Vorkammerzündkerze, d.h. ein Verlust der Verspannung der Vorkammerzündkerze im Zylinderkopf, überwacht werden.

In erfindungsgemäßer Weise ist weiter erkannt worden, dass sich oberflächliche Verformungen des Gehäuses in besonders einfacher Weise mithilfe von Dehnungsmessstreifen erfassen lassen. Dazu ist mindestens ein Dehnungsmessstreifen auf einer Oberfläche des Gehäuses angeordnet. Der Begriff "Dehnungsmessstreifen" ist im Rahmen der vorliegenden Offenbarung im weitesten Sinn zu verstehen und betrifft eine Messeinrichtung zur Erfassung von dehnenden und stauchenden Verformungen eines Messobjekts, im Rahmen der vorliegenden Offenbarung als "Dehnungen" bezeichnet. Der Dehnungsmessstreifen weist eine elektrische Messleitung auf und ist derart auf das Messobjekt aufgebracht, dass die Messleitung die Verformung des Messobjekts gleichermaßen erfährt. Die infolge der Verformung auftretende Änderung des elektrischen Widerstands der Messleitung ist messbar und wird zur Bestimmung der Verformung herangezogen.

In vorteilhafter Weise kann das Gehäuse einen Einschraubabschnitt und einen Gehäuseanschlag zum insbesondere vorgespannten Festlegen der Vorkammerzündkerze in einem Zylinderkopf aufweisen. Dabei liegt der Gehäuseanschlag im eingeschraubten Zustand der Vorkammerzündkerze an dem Zylinderkopf an und weist das Gehäuse einen auf einer dem Einschraubabschnitt zugewandten Seite des Gehäuseanschlags liegenden ersten Gehäuseabschnitt auf. Mindestens einer der Dehnungsmessstreifen ist dabei dem ersten Gehäuseabschnitt zugeordnet. Dadurch lässt sich besonders gut der Brennraumdruck erfassen. In einem festgelegten Zustand der Vorkammerzündkerze kann der erste Gehäuseabschnitt unter einer Vorspannung stehen. Der Brennraumdruck wirkt während des Motorbetriebs brennraumseitig auf die Vorkammerkappe, wodurch der erste Gehäuseabschnitt mit einer im Wesentlichen in axialer Richtung der Vorkammerzündkerze wirkenden Druckspannung beaufschlagt wird. Infolge einer Erhöhung des Brennraumdrucks bzw. der axialen Druckspannung wird die Vorspannung des ersten Gehäuseabschnitts reduziert. Diese Vorspannungsreduzierung lässt sich als Dehnungsänderung mithilfe des mindestens einen Dehnungsmessstreifens auf dem ersten Gehäuseabschnitt erfassen. Analog dazu erhöht sich die Vorspannkraft wieder mit einer Reduzierung des Brennraumdrucks. Somit ist zudem kein zusätzlicher Drucksensor im Brennraum erforderlich.

In weiter vorteilhafter Weise kann alternativ oder zusätzlich das Gehäuse einen auf einer dem Einschraubabschnitt abgewandten Seite des Gehäuseanschlags liegenden zweiten Gehäuseabschnitt aufweisen, wobei mindestens einer der Dehnungsmessstreifen dem zweiten Gehäuseabschnitt zugeordnet ist. Dadurch lässt sich besonders gut der Vorkammerdruck der Vorkammerzündkerze erfassen. In einem festgelegten Zustand der Vorkammerzündkerze wirkt der Vorkammerdruck unter anderem auf den Isolator, der infolgedessen mit einer im Wesentlichen in axialer Richtung der Vorkammerzündkerze wirkenden Druckspannung beaufschlagt wird. Diese Beanspruchung wird auf den zweiten Gehäuseabschnitt übertragen. Die daraus resultierende Dehnungsänderung lässt sich mithilfe des mindestens einen Dehnungsmessstreifens auf dem zweiten Gehäuseabschnitt erfassen. In dem Gehäuse der Vorkammerzündkerze wird der Isolator vom Brennraum aus gegen den oberen Abschnitt des Gehäuses gedrückt, wodurch eine Zugspannung im Gehäuse erzeugt wird. Im Fall einer Crimp-Verbindung zwischen Isolator und Gehäuse wird der Isolator beispielsweise gegen die plastisch verformte Gehäuseschulter gedrückt.

Grundsätzlich ist denkbar, dass das Gehäuse einteilig oder zweiteilig ausgebildet ist. Ein einteiliges Gehäuse ist besonders einfach und schnell herstellbar. Durch ein zweiteiliges Gehäuse kann zwischen Isolator und Gehäuse ein Verbund mit einer besonders hohen Tragfähigkeit bereitgestellt werden, so dass die Gefahr eines Herausdrückens des Isolators bei hohen Druckbelastungen wesentlich reduziert ist.

In besonders vorteilhafter Weise ist die Oberfläche des Gehäuses an der Stelle des mindestens einen Dehnungsmessstreifens eben ausgebildet. Der mindestens eine Dehnungsmessstreifen ist somit auf einer ebenen Fläche angeordnet. Dies hat den Vorteil, dass der mindestens eine Dehnungsmessstreifen einfacher applizierbar ist. Die Gefahr einer fehlerhaften Applikation, beispielsweise durch Lufteinschlüssen oder eine ungenaue Positionierung, die das Messergebnis verfälschen können, kann dadurch erheblich reduziert werden.

Gemäß einer vorteilhaften Weiterbildung kann der mindestens eine Dehnungsmessstreifen einen Folien-Dehnungsmessstreifen und/oder einen Sputter-Dehnungsmessstreifen umfassen. Ein Folien-Dehnungsmessstreifen ist besonders günstig und lässt sich einfach auf die Oberfläche des Gehäuses aufbringen. Der Begriff "Sputter-Dehnungsmessstreifen" ist im Rahmen der vorliegenden Offenbarung im weitesten Sinn zu verstehen und betrifft einen Dehnungsmessstreifen, bei dem die Messleitung direkt mithilfe von Kathodenzerstäubung, engl. "sputtern", beispielsweise mithilfe von Vakuum-Aufdampfung, auf das Messobjekt aufgebracht wird. Zudem kann eine Isolationsschicht zwischen der Messleitung und dem Messobjekt vorgesehen sein. Ein Sputter-Dehnungsmessstreifen ist besonders hitzebeständig und somit langlebig.

Es kann vorteilhaft sein, dass der mindestens eine Dehnungsmessstreifen ausgebildet ist, um eine Dehnungsänderung des Gehäuses in einer bezogen auf eine Längsachse des Gehäuses axialen und/oder tangentialen Richtung zu erfassen. Die Dehnungsänderungen, die in diesen Richtungen auftreten, können besonders sensitiv gegenüber Änderungen der Motorbetriebsgrößen sein.

Des Weiteren können mindestens zwei, vorzugsweise vier, Dehnungsmessstreifen angeordnet sein. Dadurch kann die Zuverlässigkeit der Messung erhöht werden. Es ist denkbar, dass aus den Messwerten der einzelnen Dehnungsmessstreifen Mittelwerte gebildet werden, die zur Bestimmung der mindestens einen Motorbetriebsgröße herangezogen werden könne.

Die Dehnungsmessstreifen können in vorteilhafter Weise entlang einer Umfangsrichtung des Gehäuses, vorzugsweise äquidistant zueinander, angeordnet sein. Dadurch lässt sich die Zuverlässigkeit der Messung weiter erhöhen. Zudem können Biegeverformungen der Zündkerze, die für die Bestimmung der mindestens einen Motorbetriebsgröße weniger relevant sind, erfasst und herausgerechnet werden.

Gemäß einer vorteilhaften Weiterbildung kann der mindestens eine Dehnungsmessstreifen in einer Brückenschaltung, vorzugsweise Wheatstone- oder Thomson-Brückenschaltung, mit einer Viertelbrücke, einer Halbbrücke oder einer Vollbrücke verschaltet sein. Eine Viertelbrücke stellt eine besonders einfache und kostengünstige Möglichkeit zur Verschaltung dar. Mithilfe einer Halbbrücke können Dehnungen des Messobjekts bzw. des Gehäuses, die infolge von Temperaturänderungen während der Messung auftreten, kompensiert werden. Eine Vollbrücke ermöglicht neben einer Temperaturkompensation die Trennung von Normal- und Biegedehnungen. Normaldehnungen sind besonders gut zur Bestimmung der mindestens einen Motorbetriebsgröße geeignet, da sich diese sehr sensitiv gegenüber einer Änderung der mindestens einen Motorbetriebsgrößen verhalten.

Die zugrundeliegende Aufgabe ist des Weiteren durch eine Vorrichtung zum Bestimmen mindestens einer Motorbetriebsgröße, insbesondere des Brennraumdrucks und/oder des Vorkammerdrucks einer Vorkammerzündkerze, mit den Merkmalen des nebengeordneten Anspruchs 11 gelöst. Diese Vorrichtung weist eine Vorkammerzündkerze nach einem der Ansprüche 1 bis 10 und eine insbesondere externe Auswerteeinheit auf, die zum Bestimmen der mindestens einen Motorbetriebsgröße basierend auf den erfassten Dehnungsänderungen des Gehäuses ausgebildet ist.

In erfindungsgemäßer Weise ist erkannt worden, dass zur Bestimmung der mindestens einen Motorbetriebsgröße eine Auswerteeinheit vorzusehen ist. Diese kann insbesondere als externe Auswerteeinheit ausgebildet sein. Mithilfe der Auswerteeinheit können die durch den mindestens einen Dehnungsmessstreifen erfassten Widerstandsänderungen bzw. Dehnungsänderungen ausgewertet werden, wobei auf Grundlage der Dehnungsänderungen die mindestens eine Motorbetriebsgröße bestimmt wird. Dabei ist denkbar, dass die Auswerteeinheit geeignet ist, um die Widerstandsänderungen in die Dehnungsänderungen zu überführen bzw. umzurechnen. Es ist zudem denkbar, dass der mindestens eine Dehnungsmessstreifen mit der Auswerteeinheit über eine oder mehrere elektrische Leitungen verbunden ist.

Die zugrundeliegende Aufgabe ist des Weiteren durch ein Verfahren zum Bestimmen mindestens einer Motorbetriebsgröße, insbesondere des Brennraumdrucks und/oder des Vorkammerdrucks einer Vorkammerzündkerze, mit den Merkmalen des nebengeordneten Anspruchs 12 gelöst. Das Verfahren wird mit einer Vorkammerzündkerze nach einem der Ansprüche 1 bis 10 und einer insbesondere externen Auswerteeinheit, ausgebildet zum Bestimmen der mindestens einen Motorbetriebsgröße basierend auf den erfassten Dehnungsänderungen des Gehäuses, durchgeführt und umfasst die Schritte:
- Erfassen von Dehnungsänderungen des Gehäuses der Vorkammerzündkerze während des Motorbetriebs;
- Bestimmen der mindestens einen Motorbetriebsgröße basierend auf den Dehnungsänderungen.

Hinsichtlich des Verfahrens ist in erfindungsgemäßer Weise erkannt worden, dass die Dehnungsänderungen während des Motorbetriebs zunächst durch den mindestens einen Dehnungsmessstreifen erfasst werden. Dabei ist denkbar, dass die mithilfe des mindestens einen Dehnungsmessstreifens ermittelten Widerstandsänderungen, welche die Dehnungsänderungen repräsentieren, durch die Auswerteeinheit in diese Dehnungsänderungen überführt bzw. umgerechnet werden. Der mindestens eine Dehnungsmessstreifen ist ausgebildet, mit der Auswerteeinheit zu kommunizieren. Dabei können die erfassten Dehnungsänderungen an die Auswerteeinheit übermittelt werden.

Mithilfe der Auswerteeinheit wird basierend auf den Dehnungsänderungen die mindestens eine Motorbetriebsgröße bestimmt. Somit kann eine kontinuierliche Überwachung der mindestens einen Motorbetriebsgröße während des Motorbetriebs erfolgen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen, räumlichen Darstellung ein Ausführungsbeispiel einer erfindungsgemäßen Vorkammerzündkerze und
- Fig. 2: in einer schematischen, geschnittenen Darstellung die erfindungsgemäße Vorkammerzündkerze gemäß Fig. 1, die in einem Zylinderkopf eines Motors festgelegt ist.

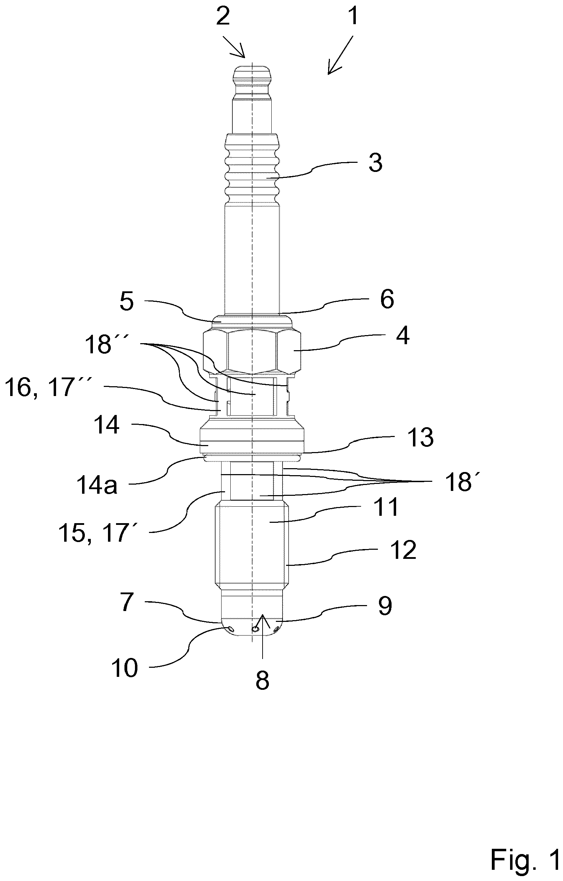

Fig. 1 zeigt in einer schematischen, räumlichen Darstellung ein Ausführungsbeispiel einer erfindungsgemäßen Vorkammerzündkerze.

Die Vorkammerzündkerze 1 weist eine Mittelelektrode 2, einen die Mittelelektrode 2 zumindest teilweise umgebenden Isolator 3, und ein den Isolator 3 zumindest teilweise umgebendes Gehäuse 4 auf. Der Isolator 3 ist über einen Verbund 5 in dem Gehäuse 4 festgelegt, wobei der Verbund 5 in diesem Ausführungsbeispiel durch eine plastische Umformung des dem Brennraum abgewandten Endes 6 des Gehäuses 4 bzw. der Gehäuseschulter realisiert ist. Alternativ ist auch denkbar, dass der Verbund 5 durch ein zweiteiliges Gehäuse ausgeführt ist. Das Gehäuse 4 weist an seinem brennraumseitigen Ende 7 eine Vorkammer 8 bildende Vorkammerkappe 9 auf, in der mehrere Übertrittsöffnungen 10 vorgesehen sind.

Des Weiteren weist das Gehäuse 4 einen Einschraubabschnitt 11 mit einem Außengewinde 12 und einen Gehäuseanschlag 13 zum insbesondere vorgespannten Festlegen der Vorkammerzündkerze 1 in einem Zylinderkopf auf. Der Gehäuseanschlag 13 ist in Form eines umlaufenden Flansches 14 ausgebildet, wobei eine Unterseite 14a des Flansches 14 im festgelegten Zustand am Zylinderkopf anliegt. Das Gehäuse 4 umfasst einen ersten Gehäuseabschnitt 15, der auf einer dem Einschraubabschnitt 11 zugewandten Seite des Gehäuseanschlags 13 liegt. Der erste Gehäuseabschnitt 15 ist dabei zwischen dem Einschraubabschnitt 11 und dem Gehäuseanschlag 13 angeordnet. Auf einer dem Einschraubabschnitt 11 abgewandten Seite des Gehäuseanschlags 13 weist das Gehäuse 4 einen zweiten Gehäuseabschnitt 16 auf.

Auf einer Oberfläche 17' des ersten Gehäuseabschnitts 15 sind zur Erfassung von Dehnungsänderungen vier Dehnungsmessstreifen 18' angeordnet. Die Dehnungsänderung des ersten Gehäuseabschnitts 15 korreliert mit dem Brennraumdruck.

Auf einer Oberfläche 17" des zweiten Gehäuseabschnitts 16 sind ebenfalls zur Erfassung von Dehnungsänderungen vier Dehnungsmessstreifen 18" angeordnet. Dabei korreliert die Dehnungsänderung des zweiten Gehäuseabschnitts 16 mit dem Vorkammerdruck der Vorkammerzündkerze 1.

Die Dehnungsmessstreifen 18', 18" sind jeweils auf dem ersten und dem zweiten Gehäuseabschnitt 15, 16 entlang einer Umfangsrichtung des Gehäuses 4 äquidistant zueinander angeordnet und in einer Brückenschaltung, vorzugsweise Wheatstone- oder Thomson-Brückenschaltung, insbesondere mit einer Vollbrücke verschaltet.

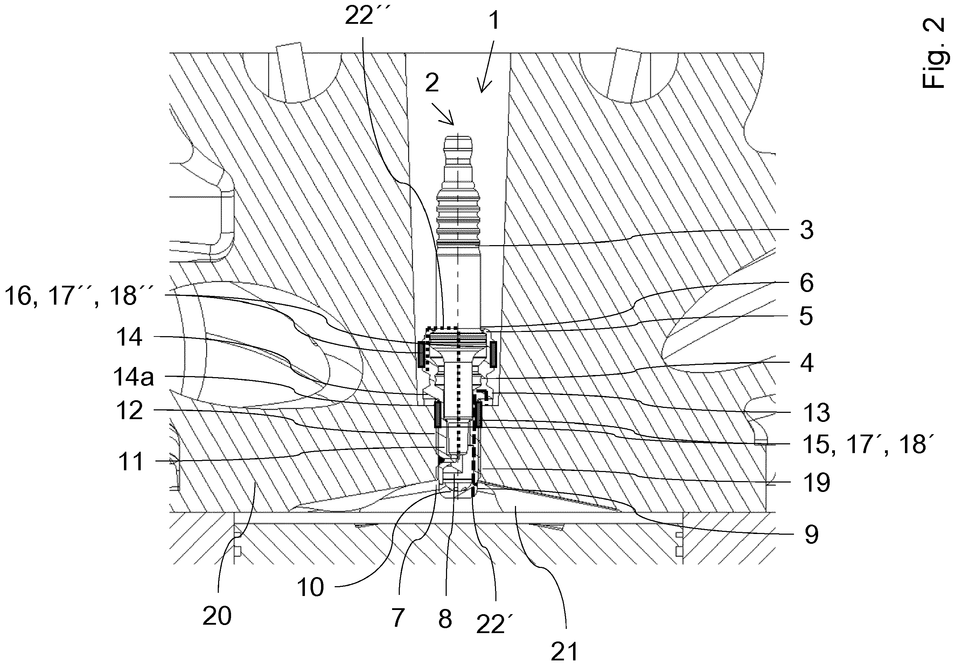

Fig. 2 zeigt in einer schematischen, geschnittenen Darstellung die erfindungsgemä-ße Vorkammerzündkerze gemäß Fig. 1, die in einem Zylinderkopf eines Motors festgelegt ist.

Die Vorkammerzündkerze 1 ist über den Einschraubabschnitt 11 und den Gehäuseanschlag 13 in einer Durchführung 19 des Zylinderkopfes 20 festgelegt. Dazu weist die Durchführung des Zylinderkopfes 20 ein Innengewinde auf, das mit dem Außengewinde 12 des Einschraubabschnitts 11 korrespondiert. Im festgelegten Zustand liegt der Gehäuseanschlag 13 bzw. die Unterseite 14a des Flansches 14 am Zylinderkopf 20 an. Somit lässt sich infolge des Einschraubens eine Vorspannung aufbringen, die in dem ersten Gehäuseabschnitt 15 wirkt.

Im eingeschraubten bzw. festgelegten Zustand erstreckt sich die Vorkammerzündkerze 1 mit der Vorkammerkappe 9 zumindest teilweise in den Brennraum 21 des Motors hinein. Durch die Übertrittsöffnungen 10 kann sich die Verbrennung somit in Form von Zündfackeln in den Brennraum 21 des Motors fortsetzen.

In Fig. 2 sind zudem schematisch die Kraftflüsse 22', 22" dargestellt, die dem Brennraumdruck und dem Vorkammerdruck zugeordnet sind.

Der Brennraumdruck wirkt brennraumseitig auf die Vorkammerkappe 9. Dadurch wird der erste Gehäuseabschnitt 15 mit einer im Wesentlichen in axialer Richtung der Vorkammerzündkerze 1 wirkenden Druckspannung beaufschlagt. Infolgedessen wird ein Teil der Vorspannung abgebaut, wobei sich diese Vorspannungsreduzierung in Form von Dehnungsänderungen mithilfe der vier Dehnungsmesstreifen 18' auf dem ersten Gehäuseabschnitt 15 erfassen lässt.

Der Vorkammerdruck wirkt auf den Isolator 3, der infolgedessen mit einer im Wesentlichen in axialer Richtung der Vorkammerzündkerze 1 wirkenden Druckspannung beaufschlagt wird. Diese Druckspannung wird über den Verbund 5 bzw. die Gehäuseschulter auf den zweiten Gehäuseabschnitt 16 übertragen. Dabei wird der Isolator 3 praktisch gegen das umgeformte Ende 6 des Gehäuses 4 gedrückt und der zweite Gehäuseabschnitt 16 erfährt im Wesentlichen eine Zugbeanspruchung. Daraus resultierende Dehnungsänderungen lassen sich mithilfe der vier Dehnungsmessstreifen 18" auf dem zweiten Gehäuseabschnitt 16 erfassen.

Hinsichtlich weiterer vorteilhafter Ausgestaltungen der erfindungsgemäßen Vorkammerzündkerze, der erfindungsgemäßen Vorrichtung sowie des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorkammerzündkerze, der erfindungsgemäßen Vorrichtung sowie des erfindungsgemäßen Verfahrens lediglich zur Erörterung der beanspruchten Lehre dienen, diese jedoch nicht auf die Ausführungsbeispiele einschränken.

### Bezugszeichenliste

- 1: Vorkammerzündkerze
- 2: Mittelelektrode
- 3: Isolator
- 4: Gehäuse
- 5: Verbund, Gehäuseschulter
- 6: Dem Brennraum abgewandtes Ende des Gehäuses
- 7: Brennraumseitiges Ende des Gehäuses
- 8: Vorkammer
- 9: Vorkammerkappe
- 10: Übertrittsöffnung
- 11: Einschraubabschnitt
- 12: Außengewinde
- 13: Gehäuseanschlag
- 14: Flansch
- 14a: Unterseite des Flansches
- 15: Erster Gehäuseabschnitt
- 16: Zweiter Gehäuseabschnitt
- 17', 17": Oberfläche des Gehäuses
- 18', 18": Dehnungsmessstreifen
- 19: Durchführung des Zylinderkopfes
- 20: Zylinderkopf
- 21: Brennraum
- 22', 22": Kraftfluss

## Patentansprüche

1. Vorkammerzündkerze (1) umfassend eine Mittelelektrode (2), einen die Mittelelektrode (2) zumindest teilweise umgebenden Isolator (3), und ein den Isolator (3) zumindest teilweise umgebendes Gehäuse (4) mit einer eine Vorkammer (8) bildenden Vorkammerkappe (9),
**dadurch gekennzeichnet, dass** mindestens ein Dehnungsmessstreifen (18', 18") vorgesehen ist, der geeignet ist, mit einer insbesondere externen Auswerteeinheit zu kommunizieren, wobei der mindestens eine Dehnungsmessstreifen (18', 18") auf und/oder in einer Oberfläche (17', 17") des Gehäuses (4) zur Erfassung von Dehnungsänderungen angeordnet ist, wobei die Dehnungsänderungen mit mindestens einer Motorbetriebsgröße, insbesondere dem Brennraumdruck und/oder dem Vorkammerdruck der Vorkammerzündkerze (1), korrelieren.

2. Vorkammerzündkerze (1) nach Anspruch 1, **dadurch gekennzeichnet, dass** das Gehäuse (4) einen Einschraubabschnitt (11) und einen Gehäuseanschlag (13) zum insbesondere vorgespannten Festlegen der Vorkammerzündkerze (1) in einem Zylinderkopf (20) aufweist, wobei der Gehäuseanschlag (13) im eingeschraubten Zustand der Vorkammerzündkerze (1) an dem Zylinderkopf (20) anliegt und wobei das Gehäuse (4) einen auf einer dem Einschraubabschnitt (11) zugewandten Seite des Gehäuseanschlags (13) liegenden ersten Gehäuseabschnitt (15) aufweist, wobei mindestens einer der Dehnungsmessstreifen (18') dem ersten Gehäuseabschnitt (15) zugeordnet ist.

3. Vorkammerzündkerze (1) nach Anspruch 1 oder 2, **dadurch gekennzeichnet, dass** das Gehäuse (4) einen Einschraubabschnitt (11) und einen Gehäuseanschlag (13) zum insbesondere vorgespannten Festlegen der Vorkammerzündkerze (1) in einem Zylinderkopf (20) aufweist, wobei der Gehäuseanschlag (13) im eingeschraubten Zustand der Vorkammerzündkerze (1) an dem Zylinderkopf (20) anliegt und wobei das Gehäuse (4) einen auf einer dem Einschraubabschnitt (11) abgewandten Seite des Gehäuseanschlags (13) liegenden zweiten Gehäuseabschnitt (16) aufweist, wobei mindestens einer der Dehnungsmessstreifen (18") dem zweiten Gehäuseabschnitt (16) zugeordnet ist.

4. Vorkammerzündkerze (1) nach einem der Ansprüche 1 bis 3, **dadurch gekennzeichnet, dass** das Gehäuse (4) einteilig oder zweiteilig ausgebildet ist.

5. Vorkammerzündkerze (1) nach einem der Ansprüche 1 bis 4, **dadurch gekennzeichnet, dass** die Oberfläche (17', 17") des Gehäuses (4) an der Stelle des mindestens einen Dehnungsmessstreifens (18', 18") eben ausgebildet ist.

6. Vorkammerzündkerze (1) nach einem der Ansprüche 1 bis 5, **dadurch gekennzeichnet, dass** der mindestens eine Dehnungsmessstreifen (18', 18") einen Folien-Dehnungsmessstreifen und/oder einen Sputter-Dehnungsmessstreifen umfasst.

7. Vorkammerzündkerze (1) nach einem der Ansprüche 1 bis 6, **dadurch gekennzeichnet, dass** der mindestens eine Dehnungsmessstreifen (18', 18") ausgebildet ist, um eine Dehnungsänderung des Gehäuses (4) in einer bezogen auf eine Längsachse des Gehäuses axialen und/oder tangentialen Richtung zu erfassen.

8. Vorkammerzündkerze (1) nach einem der Ansprüche 1 bis 7, **dadurch gekennzeichnet, dass** mindestens zwei, vorzugsweise vier, Dehnungsmessstreifen (18', 18") angeordnet sind.

9. Vorkammerzündkerze (1) nach Anspruch 8, **dadurch gekennzeichnet, dass** die Dehnungsmessstreifen (18', 18") entlang einer Umfangsrichtung des Gehäuses (4), vorzugsweise äquidistant zueinander, angeordnet sind.

10. Vorkammerzündkerze (1) nach einem der Ansprüche 1 bis 9, **dadurch gekennzeichnet, dass** der mindestens eine Dehnungsmessstreifen (18', 18") in einer Brückenschaltung, vorzugsweise Wheatstone- oder Thomson-Brückenschaltung, mit einer Viertelbrücke, einer Halbbrücke oder einer Vollbrücke verschaltet ist.

11. Vorrichtung zum Bestimmen mindestens einer Motorbetriebsgröße, insbesondere des Brennraumdrucks und/oder des Vorkammerdrucks einer Vorkammerzündkerze (1), mit einer Vorkammerzündkerze (1) nach einem der Ansprüche 1 bis 10 und einer insbesondere externen Auswerteeinheit, ausgebildet zum Bestimmen der mindestens einen Motorbetriebsgröße basierend auf den erfassten Dehnungsänderungen des Gehäuses (4).

12. Verfahren zum Bestimmen mindestens einer Motorbetriebsgröße, insbesondere des Brennraumdrucks und/oder des Vorkammerdrucks einer Vorkammerzündkerze (1), mit einer Vorrichtung nach Anspruch 11, umfassend die Schritte:
- Erfassen von Dehnungsänderungen des Gehäuses (4) der Vorkammerzündkerze (1) während des Motorbetriebs;
- Bestimmen der mindestens einen Motorbetriebsgröße basierend auf den Dehnungsänderungen.

13. Verfahren nach Anspruch 12, wobei die erfassten Dehnungsänderungen an die Auswerteeinheit übermittelt werden.
